# EUROPÄISCHE PATENTSCHRIFT

(11) **EP 3 398 493 B1**
(45) Veröffentlichungstag und Bekanntmachung des Hinweises auf die Patenterteilung: **29.01.2020**
(21) Anmeldenummer: 18170817.3
(22) Anmeldetag: 04.05.2018
(51) Int. Cl.: A47J 37/07

(54) **GRILL**
GRILL
GRIL

(30) Priorität: 04.05.2017 DE 202017102649 U
(43) Veröffentlichungstag der Anmeldung: 07.11.2018
(73) Patentinhaber: Enders Colsman AG, 58791 Werdohl (DE)
(72) Erfinder: GLOGER, Michael, 58791 Werdohl (DE)
(74) Vertreter: Haverkamp, Jens

(56) Entgegenhaltungen:
- EP-B1- 2 785 227
- WO-A1-2014/038800
- US-A1- 2004 107 842
- US-A1- 2015 114 238

## Beschreibung

Die Erfindung betrifft einen Grill mit einer oberseitig offenen, eine umlaufende Seitenwand aufweisenden Wannenstruktur, mit einem in der Wannenstruktur mit Abstand zu deren Seitenwand angeordneten Brennstoffbehälter, mit einer Luftzuführung zum unterseitigen Zuführen von Luft in den Brennstoffbehälter und mit einem sich über die oberseitige Öffnung der Wannenstruktur erstreckenden Rost, dessen in der Flucht des Umrisses des Brennstoffbehälters oberhalb des Brennstoffbehälters befindlicher Rostbereich geschlossen ausgeführt ist

Ein solcher Grill, der auch als Gargerät angesprochen werden kann, kann aufgrund des in einer Wannenstruktur angeordneten Brennstoffbehälters und einer definierten Luftzuführung rauchfrei betrieben werden. Somit kann ein solcher Grill auch als Tischgrill eingesetzt werden. Die Anordnung des Brennstoffbehälters innerhalb der Wannenstruktur, die ihrerseits in einem Gehäuse angeordnet ist, stellt in Bezug auf den Brennstoffbehälter eine ausreichende Wärmeisolierung nach außen hin bereit. Verbrannt wird in dem Brennstoffbehälter als Brennstoff Holzkohle. Der Grill verfügt über eine regelbare Luftzufuhr zum Einstellen der Glühtemperatur der Holzkohle. Der Brennstoffbehälter weist eine umlaufende Wand auf. Diese weist eine Siebstruktur auf, wobei es sich um ein Metallgestrick oder auch um ein Lochblech oder dergleichen handeln kann. Diese Wand lässt die beim Glühen der Holzkohle entstehende Wärme durch und, da aus Eisenmetall hergestellt, wird bei einem Betrieb des Grills zum Wärmestrahler.

Ein solcher Grill ist aus WO 2014/038800 A1 und aus EP 2 785 227 B1 bekannt. WO 2014/038800 A1 offenbart einen gattungsgemäßen Grill. Der in EP 2 785 227 B1 als Holzkohlekammer angesprochene Brennstoffbehälter ist zylindrisch ausgeführt und umfasst einen in seiner Fläche gelochten abnehmbaren Deckel. Über die obere Öffnung der Wannenstruktur erstreckt sich ein aus einzelnen Drahtstäben zusammengesetzter Rost.

Innerhalb der Wannenstruktur ist der Brennstoffbehälter zentral mit Abstand zum Boden der Wannenstruktur angeordnet. Der Brennstoffbehälter sitzt in einer Anzünderschale, die mit Füßen auf dem Boden der Wannenstruktur aufsteht. Ein Lufteinlassrohr ist durch den Boden der Wannenstruktur hindurchgeführt und mündet in der Anzünderschale unterhalb des gelochten Bodens des Brennstoffbehälters.

Erwärmt wird das auf dem Grillrost befindliche Gargut durch die in radialer Richtung aus der als Lochblech ausgeführten umlaufenden Wand des Brennstoffbehälters austretende und nach oben aufsteigende Heißluft. Der zum oberseitigen Verschließen der Brennstoffkammer vorgesehene Deckel ist gelocht, um mit der daraus austretenden Heißluft den zentralen, geschlossen ausgeführten Flächenbereich des Rostes zu erwärmen. Auf die Erwärmung von auf dem Rost außerhalb des geschlossen ausgeführten Flächenbereiches befindlichem Gargut hat, wenn die umlaufende Wand der Brennstoffkammer hinreichend erwärmt ist, auch die von dieser abgegebene IR-Strahlung (Infrarot-Strahlung) Einfluss. Als Rost ist bei diesem Stand der Technik ein an sich bekannter Stäbchenrost vorgesehen. Die Wannenstruktur weist eine kreisförmige Öffnung auf. Die Mantelfläche des Brennstoffbehälters ist zylindrisch ausgeführt.

Aufgrund der vorbeschriebenen Ausgestaltung dieses Grills kann dieser zwar als Tischgrill verwendet werden, weist jedoch eine Höhe auf, die mitunter als zu hoch empfunden wird. Zudem wäre es wünschenswert, wenn die Temperaturverteilung auf der Oberseite des Rostes über seine Gesamtfläche homogener sein könnte, damit unabhängig von dem Flächenbereich, auf den ein zu garendes Gut aufgelegt wird, der gewünschte Garprozess bei gleicher oder zumindest annähernd gleicher Temperatur durchgeführt werden kann.

Der Erfindung liegt daher die Aufgabe zugrunde, einen Grill der eingangs genannten Art dergestalt weiterzubilden, dass die vorstehend zu dem Stand der Technik aufgezeigten Nachteile vermieden, zumindest jedoch deutlich reduziert sind.

Gelöst wird diese Aufgabe erfindungsgemäß durch einen eingangs genannten, gattungsgemäßen Grill, bei dem sich der oberseitige Abschluss des Brennstoffbehälters unter Belassung nur eines nur geringen Abstandspaltes bis an die Unterseite des geschlossen ausgeführten Rostbereiches des Rostes erstreckt, dass sich der geschlossen ausgeführte, oberhalb des Brennstoffbehälters befindliche, zentrale, Rostbereich des Rostes über den zu der Seitenwand der Wannenstruktur weisenden seitlichen Abschluss des Brennstoffbehälters in Richtung zum Randabschluss des Rostes hinaus erstreckt.

Bei diesem Grill ist der geschlossen ausgebildete zentrale Flächenbereich seines Rostes deutlich größer als die oberseitige Abschlussfläche des darunter befindlichen Brennstoffbehälters. Der geschlossen ausgeführte Flächenbereich des Rostes erstreckt sich in radialer Richtung nach außen hin über die Flucht des seitlichen Abschlusses des darunter befindlichen Brennstoffbehälters und somit in der Flucht des Umrisses des Brennstoffbehälters hinaus. Der Rost selbst ist aus einem Wärme gut leitenden Material hergestellt, beispielsweise aus Gusseisen. Die Erwärmung des geschlossen ausgeführten Rostbereiches erfolgt durch den in dem Brennstoffbehälter befindlichen Brennstoff, typischerweise glühende Holzkohle. Der Brennstoffbehälter ist oberseitig typischerweise offen und nicht mit einem Deckel verschlossen. Somit wird dieser geschlossen ausgeführte Rostbereich zum einen durch die Beaufschlagung seiner Unterseite durch das direkte Anströmen der zentral aus dem Brennstoffbehälter aufsteigenden Verbrennungsgase und zum anderen durch die von der glühenden Holzkohle ausgehende Wärmestrahlung (Infrarotstrahlung) erwärmt bzw. erhitzt. Aufgrund der Wärme gut leitenden Eigenschaften des Rostes wird diese in den Rost eingekoppelte Wärme über den gesamten geschlossen ausgeführten Rostbereich verteilt. Die über den seitlichen Abschluss des Brennstoffbehälters sich hinaus erstreckenden Bereiche dieses zentralen, geschlossen ausgeführten Rostbereiches werden zusätzlich von in radialer Richtung aus dem Brennstoffbehälter austretenden Verbrennungsgasen angeströmt. Die Wärme gut leitenden Eigenschaften dieses geschlossen ausgeführten Rostbereiches führen zu einer sehr homogenen Temperaturverteilung über diesen Rostbereich.

Der Rost des Grills ist einstückig ausgebildet, beispielsweise als Gussteil oder aus einer Blechplatine, typischerweise aus einem Eisenmetall, insbesondere einem Stahl, hergestellt. Bei einem solchen Rost erfolgt die Wärmeverteilung innerhalb des Rostes ausschließlich durch Wärmeleitung, was wiederum die Homogenität der gewünschten Wärmeverteilung innerhalb des Rostes und damit auf seiner Oberfläche begünstigt.

Der Rost dieses Grills verfügt über einen ebenfalls geschlossen ausgeführten und von dem geschlossen ausgeführten zentralen Rostbereich beabstandeten Randbereich. Dieser ist von dem zentralen, geschlossen ausgeführten Bereich des Rostes durch einen offen ausgeführten Rostbereich getrennt. Dieser umgibt ringförmig den zentralen, geschlossen ausgeführten Rostbereich. Dieser offen ausgeführte Rostbereich verfügt über Durchlässe, um Verbrennungsgase aus der Wannenstruktur nach oben durch den Rost hindurch herauszulassen. In diesem offen ausgeführten Rostbereich ist der zentrale, geschlossen ausgeführte Rostbereich mit dem Randbereich durch Roststäbe verbunden. Der Begriff "Roststäbe" ist im Rahmen dieser Ausführungen weit zu verstehen und umfasst nicht nur konkret stabförmig ausgebildete Roststäbe, sondern auch solche, wie diese beispielsweise bei gusseisernen Rosten üblich sind, wozu auch sickenförmig ausgeführte Roststäbe zählen, die aufgrund ihrer Ausgestaltung gegenüber benachbarten Rostbereichen keine größere Materialstärke aufweisen, sondern die durch ihre Geometrie einen oberseitigen Scheitel ausbilden. Diese Roststäbe weisen typischerweise eine signifikant größere Breite in der Auflegeebene des Rostes auf als übliche Roststäbe aus Draht. Dieses begünstigt den Wärmefluss und damit einen Temperaturausgleich zwischen der Temperatur des geschlossen ausgeführten zentralen Rostbereiches und dem ebenfalls geschlossen ausgeführten Randbereich. Wenn im Rahmen dieser Ausführungen von geschlossen ausgeführten Rostbereichen die Rede ist, dann ist hierunter nicht nur eine solche Rostfläche zu verstehen, durch die keine Verbrennungsgase hindurchtreten, sondern auch solche Rostbereiche, die durchaus kleindimensionierte Öffnungen nach Art einer Perforierung aufweisen können. Bevorzugt wird eine Ausgestaltung, bei der auch die geschlossen ausgeführten Rostbereiche, die keine nach Art einer Perforierung ausgeführten Durchbrechungen aufweisen.

Die Flächenanteile der geschlossen ausgeführten Bereiche des Rostes sind signifikant größer als die Flächenanteile, die von den offen ausgeführten und durch Roststäbe gekennzeichneten Rostbereiche.

Auf die Oberseite des Rostes - die Auflegefläche - aufgelegte zu garende Lebensmittel werden bei einem solchen Rost vornehmlich oder ausschließlich durch die in dem Rost gespeicherte Wärme gegart. Bei herkömmlichen, aus Draht gefertigten Stäbchenrosten, erfolgt eine Erwärmung eines zu garenden Lebensmittels unmittelbar durch die heißen Verbrennungsgase. Diese werden somit bei diesem innovativen Rost von dem zu garenden Lebensmittel jedenfalls in den geschlossen ausgeführten Rostbereichen von dem oder den zu garenden Lebensmitteln abgehalten.

Typischerweise beträgt die Breite der Roststäbe in der Auflegeebene des Rostes zumindest 80% der lichten Weite der benachbarten Durchbrechungen. In einem Ausführungsbeispiel ist vorgesehen, dass die diesbezügliche Breite der Roststäbe in etwa der lichten Weite der benachbarten Durchbrechungen entspricht oder größer ist als diese. Gewährleistet wird hierdurch, dass der geschlossen ausgeführte zentrale Rostbereich mit dem geschlossen ausgeführten randlichen Rostbereich über Roststäbe mit hinreichender Querschnittsfläche für die Zwecke einer homogenen Wärmeverteilung des Rostes gewährleistet ist.

Durch das Überkragen des zentralen, geschlossen ausgeführten Flächenbereiches des Rostes über die Flucht des außenseitigen Abschlusses des darunter befindlichen Brennstoffbehälters hinaus werden in radialer Richtung aus dem Brennstoffbehälter austretende Verbrennungsgase, die die Unterseite des geschlossen ausgeführten Rostbereiches anströmen, zu dem offen ausgeführten Rostbereich gelenkt. Unterstützt wird diese Verbrennungsgasumlenkung durch die oberseitig aus dem Brennstoffbehälter austretenden Verbrennungsgase, die aufgrund des geringen Abstandspaltes zu der Unterseite des Rostes ebenfalls in radialer Richtung von dem Brennstoffbehälter nach außen abgelenkt werden. Auch die radial aus dem Brennstoffbehälter ausgetretenen Verbrennungsgase sowie die von der Brennstoffbehälterwand emittierte Wärmestrahlung erwärmen den in radialer Richtung über den Rand des Brennstoffbehälters hinausgeführten geschlossenen Rostbereich. Bei einem solchen Grill mit seinem beschriebenen Rost ist der Durchtritt der heißen Verbrennungsgase durch den Rost auf den offen ausgeführten Rostbereich mit der in dem Verbrennungsgasstrom enthaltenen Wärme konzentriert. In diesem offen ausgeführten Rostbereich werden die Roststäbe nicht nur unterseitig, sondern durch das vorbeiströmende heiße Verbrennungsgas auch seitlich von diesem erwärmt. Somit wird der notwendige Verbrennungsgasdurchtritt in geschickter Weise genutzt, zusätzlich Wärme in den Rost an dieser Stelle einzukoppeln. Folglich ist die an der Oberseite des Rostes festzustellende Temperatur auch in diesem offen ausgeführten Rostbereich etwa dieselbe, wie in dem zentralen, geschlossen ausgeführten Flächenbereich. Auch aus diesem Grunde ist die Wärmeverteilung an der Oberseite des Rostes gegenüber vorbekannten Ausgestaltungen besonders homogen.

Die umlaufende Wand des Brennstoffbehälters ist bei diesem Grill bis knapp unter die untere Oberfläche des geschlossen ausgeführten Rostbereiches geführt. Ein geringer Abstand zwischen dem oberen Abschluss der umlaufenden Wand des Brennstoffbehälters von der Unterseite des Rostes von wenigen Millimetern ist bereits ausreichend, damit die oberseitig aus dem Brennstoffbehälter austretenden heißen Verbrennungsgase den Brennstoffbehälter verlassen können. Durch diesen geringen Abstand ist zudem sichergestellt, dass die heißen Verbrennungsabgase in engem Kontakt an der Unterseite des Rostes von dem Brennstoffbehälter in radialer Richtung nach außen zu dem offen ausgeführten Rostbereich gelenkt werden. Dieser Abstand ist typischerweise nicht größer als in etwa 4-5 cm. Ein kleinerer Spaltabstand ist bevorzugt. Wenn der Abstand des oberen Abschlusses des Brennstoffbehälters von der Unterseite des Rostes entsprechend gering ist, hat dieses unmittelbar Einfluss auf die Bauhöhe, die sodann entsprechend gering sein kann.

Eine weitere Verbesserung bezüglich des vorstehenden Konzeptes kann dadurch erreicht werden, wenn der geschlossen ausgeführte Randbereich des Rostes sich in Richtung zu dem oberhalb des Brennstoffbehälters befindlichen Rostbereich über den oberseitigen Abschluss der Seitenwand der Wannenstruktur vorspringend erstreckt. Dieser Vorsprung ist typischerweise deutlich breiter als ein Roststab. Verbrennungsgase, die an der Seitenwand der Wannenstruktur entlang streichend aufsteigen, werden an diesem Vorsprung umgelenkt, und zwar in Richtung zu dem benachbarten, offen ausgeführten Rostbereich. Zum einen wird durch diese Maßnahme der Randbereich aufgrund der Umlenkung des Verbrennungsgasstromes und der dadurch ebenso wie bei der Umlenkung der Verbrennungsgase an dem überkragenden Abschnitt des zentralen, geschlossen ausgeführten Rostbereiches verbesserten Wärmeübergabe intensiver erwärmt, sodass auch der Randbereich des Rostes, der ansonsten typischerweise den kühlsten Bereich des Rostes darstellt, eine verbesserte Erwärmung erfährt, was wiederum zu einer Homogenisierung der auf der Oberseite des Rostes bei einem Betrieb des Grills feststellbaren Temperaturverteilung beiträgt.

Bei diesem Grill weist die Gesamtoberfläche der die Roststäbe begrenzenden Rostöffnungen an der Gesamtoberfläche des Rostes typischerweise zwischen 15% und 50% auf. Damit ist der geschlossen ausgeführte Rostbereich bezüglich der von diesem eingenommenen Oberfläche deutlich größer als der durch die Summe der Querschnittsflächen der Rostöffnungen eingenommene Bereich. Vorzugsweise beträgt die Gesamtoberfläche der Rostöffnungen 15% bis 35%, insbesondere liegt der Anteil zwischen 25% und 30% an der Gesamtoberfläche des Rostes. Die vorstehenden Verhältnisse beziehen sich auf die für das Garen eines Gargutes nutzbare Oberfläche des Rostes. In diesem Zusammenhang sind die Rostöffnungen als solche bezüglich ihrer Querschnittsfläche angegeben.

Der Durchmesser des Brennstoffbehälters und somit der Durchmesser seiner umlaufenden Wand beträgt gemäß einem Ausführungsbeispiel 40% bis 65% der Länge der oberseitigen Öffnung der Wannenstruktur in derselben Richtung. Bei einer solchen Ausgestaltung wird der zentrale, geschlossen ausgeführte Rostbereich von einem in Bezug auf die Fläche der oberseitigen Wannenöffnung relativ großflächigen Brennstoffbehälter bzw. der darin glühenden Holzkohle erwärmt. Entsprechend größer ist der unmittelbar von der in dem Brennstoffbehälter glühenden Kohle angeströmte Bereich, welches derjenige Bereich ist, der unmittelbar oberhalb der oberen Öffnung des Brennstoffbehälters angeordnet ist. Aufgrund der besonders guten homogenen Wärmeverteilung auf der Oberseite des Rostes kann der vorgenannte Durchmesser des Brennstoffbehälters bezogen auf die Länge der oberseitigen Öffnung der Wannenstruktur in derselben Richtung auch nur zwischen 45% und 55% betragen, und zwar unter Beibehaltung einer homogenen Wärmeverteilung auf der Oberseite des Rostes. Auf Grund der besonderen Wärmeverteilungskapazitäten des Rostes des beschriebenen Grills kann der Durchmesser des Brennstoffbehälters bezogen auf den Durchmesser der Wannenstruktur auch kleiner ausgelegt sein. Auf Grund der besonders guten Wärmeverteilungseigenschaften des Rostes dieses Grills wird grundsätzlich kein besonderer Abstand zwischen dem Rost und dem oberen Abschluss des Brennstoffbehälters zum Zwecke einer Homogenisierung der Wärmeverteilung benötigt.

Bei einem Grill, wie vorbeschrieben, wird der Rost in geschickter Weise durch unterschiedliche Mechanismen zum Zwecke einer Temperaturhomogenisierung erwärmt. Zum einen werden geschlossen ausgeführte Rostbereiche bereitgestellt, die besonders intensiv mit heißen Verbrennungsgasen angeströmte Bereiche bilden. Zum anderen werden die durch den Rost für den Betrieb des Grills notwendigerweise durchzulassenden heißen Verbrennungsabgase auf eine relativ kleine Fläche konzentriert, sodass das darauf befindliche Gargut unmittelbar von den heißen Verbrennungsgasen angeströmt ist, wobei die diesen Bereich kennzeichnenden Roststäbe ebenfalls einer Wärmeeinkopplung und damit einer Entnahme von Wärme aus den Verbrennungsabgasen dienen. Mit diesem Konzept kann durch entsprechende Dimensionierung und Auslegung der geschlossen ausgeführten Rostbereiche und der offen ausgeführten Rostbereiche auch bei nicht rotationssymmetrisch ausgeführten Grills, beispielsweise bei rechteckförmig ausgeführten Grills eine sehr homogene Temperaturverteilung über die Oberseite des Rostes erzielt werden.

Nachfolgend ist die Erfindung anhand eines Ausführungsbeispiels unter Bezugnahme auf die beigefügten Figuren beschrieben. Es zeigen:
- **Fig. 1:**: Eine perspektivische Ansicht eines als Tischgrill einsetzbaren Grills,
- **Fig. 2:**: ein Querschnitt durch den Grill der Figur 1 in Schnittebene seiner kurzen Seite und
- **Fig. 3:**: eine Draufsicht auf den Grill der Figur 1.

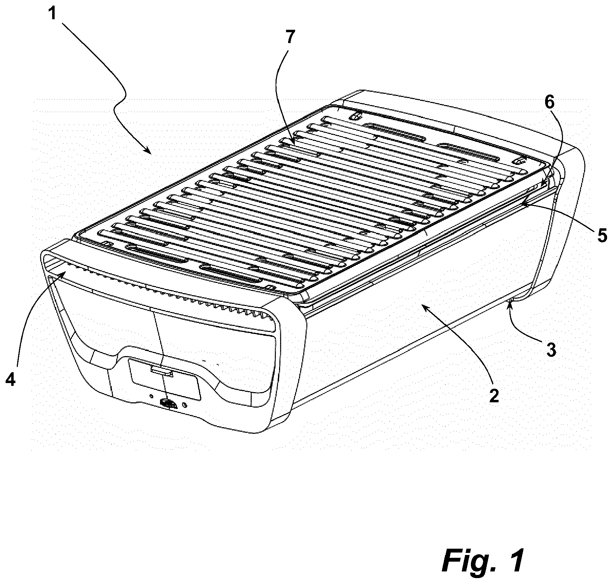

Ein als Holzkohlegrill ausgelegter Grill 1 ist bei dem dargestellten Ausführungsbeispiel mit einer in etwa rechteckförmigen Grundfläche ausgeführt. Der Grill 1 umfasst ein Gehäuse 2. Das Gehäuse 2 ist an seinen Schmalseitenenden über Füße 3 bodenseitig abgestützt. Die Schmalseitenenden des Gehäuses 2 verfügen über Handhabungskonturen 4, an denen der Grill 1, ohne diesen untergreifen zu müssen, gehandhabt werden kann. Die Schmalseitenendstücke des Grills 1 sind aus Kunststoff hergestellt. Zwischen den Schmalseitenendstücken befindet sich ein trogförmig ausgeführtes, die Schmalseitenendstücke verbindendes Metallteil als weiterer Bestandteil des Gehäuses 2. In das Gehäuse 2 ist eine Wannenstruktur 5 eingehängt, von der in Figur 1 so gut wie nur ihr umlaufender, radial nach außen abragender Flansch 6 erkennbar ist. Oberhalb der Wannenstruktur 5 befindet sich ein Rost 7. Das Gehäuse 2 ist aus einem wärmebeständigen Kunststoff hergestellt. Die Wannenstruktur 5 ist ein tiefgezogenes Stahlblechteil.

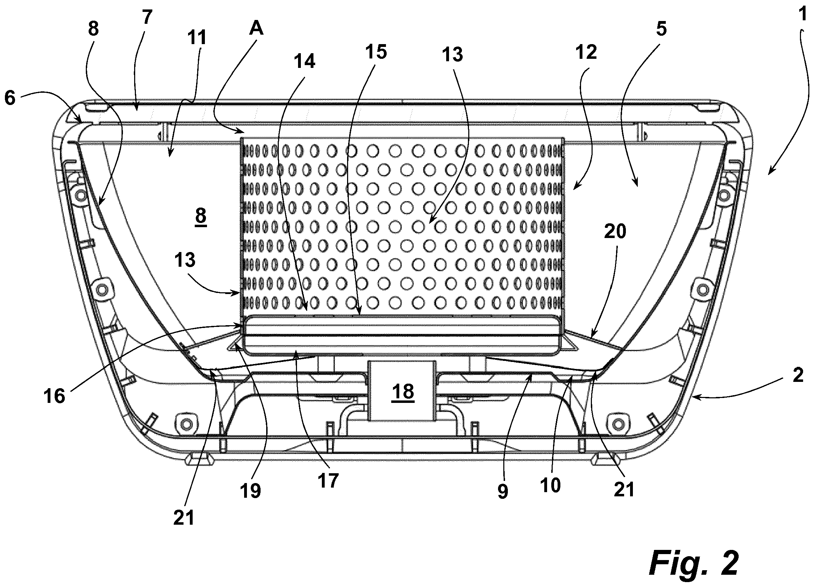

Der Aufbau des Grills 1 ist detaillierter der Schnittdarstellung der Figur 2 entnehmbar. Die in das Gehäuse 2 eingehängte Wannenstruktur 5 weist eine umlaufende Seitenwand 8 auf. Die Seitenwandabschnitte sind durch gerundet ausgeführte Kanten miteinander verbunden. Die Wannenstruktur 5 trägt unterseitig einen Boden 9. Der Boden 9 ist profiliert und verfügt über eine bodenseitig vor dem Übergang in die Seitenwand 8 eingebrachte umlaufende Rinne 10. Die Rinne 10 ist dadurch ausgebildet, dass der mittlere Bereich des Bodens 9 gegenüber der Sohle der Rinne 10 in Richtung zur oberen Öffnung 11 der Wannenstruktur verkröpft ist. Die Seitenwand 8 ist ausgehend von ihrem oberen, durch den Flansch 6 gebildeten Abschluss in Richtung zu dem Boden hin geneigt, sodass die Fläche des Bodens 9 deutlich kleiner als die durch die oberseitige Öffnung 11 bereitgestellte Fläche ist. Die Verjüngung der Seitenwand 8 zu dem Boden 9 hin erfolgt auf einer gekrümmten Bahn mit in Richtung zum Boden 9 hin größer werdendem Krümmungsradius.

Innerhalb der Wannenstruktur 5 befindet sich ein Brennstoffbehälter 12. Dieser ist bei dem dargestellten Ausführungsbeispiel elliptisch ausgeführt, wobei die Langachse der elliptischen Form der Langsachse des rechteckförmigen Grills 1 bzw. der Wannenstruktur 5 folgt. Der Brennstoffbehälter 12 dient zur Aufnahme des zum Betreiben des Grills 1 eingesetzten Brennstoffes, wobei als Brennstoff typischerweise Holzkohle eingesetzt wird. Der Brennstoffbehälter 12 umfasst eine umlaufende, bei dem dargestellten Ausführungsbeispiel sich vertikal erstreckende Wand 13. Diese ist wärme- und verbrennungsgasdurchlässig. Bei dem dargestellten Ausführungsbeispiel ist die umlaufende Wand 13 des Brennstoffbehälters 12 als Lochblech ausgeführt. Anstelle eines Lochbleches kann die umlaufende Wand auch aus einem anderen, über die Fläche in einem zumindest einigermaßen regelmäßigen Rasterabstand aufweisende Öffnungen bereitstellenden Teil realisiert sein, wie beispielsweise einem Streckmetall oder einem Drahtgestrick. Der Brennstoffbehälter 12 ist unterseitig durch ein nach Art einer Halbschale ausgelegtes Bodenteil 14 verschlossen. Das Bodenteil 14 verfügt über einen die umlaufende Wand 13 unterseitig verschließenden Boden 15 und eine daran angeformte und gegenüber der Ebene des Bodens 15 abgewinkelte umlaufende Wand 16. In dem Boden 15 sind Durchbrechungen eingebracht, um Verbrennungsluft in den Brennstoffbehälter 12 einbringen zu können. Das nach Art einer Halbschale ausgebildete Bodenteil 14 ist nach unten offen und stellt die obere Halbschale eines bei einem Betrieb des Grills 1 mit einer unteren Halbschale gebildeten Zuluftsammlers dar. Die untere Halbschale ist zugleich eine Anzünderschale 17, in die zum Anstecken von in den Brennstoffbehälter 12 eingelegter Holzkohle ein Anzündegel oder dergleichen eingelegt wird. Die Anzünderschale 17 weist dieselbe Geometrie auf wie das Bodenteil 14, ist jedoch bezüglich ihrer Öffnung nach oben offen, wie aus Figur 1 ersichtlich, gehalten. In die Anzünderschale 17 mündet ein Zuluftrohr 18. Die umlaufende Wand 13 des Brennstoffbehälters 12 ist außenseitig an der Wand 16 des Bodenteils 14 befestigt, beispielsweise durch Punktschweißungen. Der Brennstoffbehälter 12 trägt als Verlängerung seiner umlaufenden Wand 13 unterseitig einen in radialer Richtung nach außen ausgestellten, in Richtung zu dem Boden 9 geneigten Kragen 19.

Der Grill 1 verfügt des Weiteren über einen den Brennstoffbehälter 12 oberhalb seines Kragens 19 geordneten Schild 20, der sich von der äußeren Mantelfläche der umlaufenden Wand 13 bis zu der Seitenwand 8 der Wannenstruktur 5 erstreckt. Der Schild 20 ist bei dem dargestellten Ausführungsbeispiel in radialer Richtung nach außen in Richtung zu dem Boden 9 der Wannenstruktur 5 geneigt, damit darauf auftreffende Garflüssigkeit von dem Brennstoffbehälter 12 weg in Richtung zu der Seitenwand 8 der Wannenstruktur 5 abfließen kann. Bei dem Schild 20 handelt es sich um ein Stahlblechteil. Bei dem dargestellten Ausführungsbeispiel erstreckt sich der Schild 20 bis an die Seitenwand 8 der Wannenstruktur 5 heran. Der Schild 20 ist in Längs- und in Querrichtung der Wannenstruktur 5 gewölbt. Erreicht wird hierdurch, dass die gerundeten Ecken des Schildes 20 jeweils bodennäher angeordnet sind als die zwischen den benachbarten Ecken angeordneten Krümmungsscheitel. Auf die Oberseite des Schildes 20 auftreffende Garflüssigkeit wird somit nicht nur zu der benachbarten umlaufenden Seitenwand 8 der Wannenstruktur 5 geleitet, sondern zudem jeweils zu einer Eckausbildung des Schildes 20 bzw. einer gerundeten Kantenausbildung der umlaufenden Wand 8 im Übergang von einer Längsseite der Wannenstruktur in eine Querseite. In diesen Eck- bzw. Kantenbereichen liegt der Schild 20 nicht an der Seitenwand 8 der Wannenstruktur 5 an. Auf diese Weise sind Garflüssigkeitsablauföffnungen 21 bereitgestellt, durch die auf die Oberseite des Schildes 20 auftreffende Garflüssigkeit von der Oberseite des Schildes 20 abfließen kann. Gesammelt wird diese Flüssigkeit auf dem Boden 9 bzw. zunächst seiner umlaufenden Rinne 10, die auch als Garflüssigkeitssammelrinne angesprochen werden kann.

Die sich somit auf dem Boden 9 bzw. seiner Garflüssigkeitssammelrinne 10 ansammelnde Garflüssigkeit, insbesondere Öl und Fett ist durch den Schild 20 wirksam vor einer direkten Erwärmung durch den Brennstoffbehälter 12 bzw. der darin glühenden Holzkohle geschützt. Die Gefahr eines Fett- oder Ölbrandes besteht bei dem Grill 1 daher nicht.

In die Luftzuführung über das Luftzuführrohr 18 in den durch die beiden Halbschalen - des Bodenteils 14 einerseits und der Anzünderschale 17 andererseits - gebildeten Zuluftsammler ist eine ein elektromotorisch angetriebener Lüfter (in den Figuren nicht gezeigt) eingeschaltet, über den Volumenstrom des Zuluftstromes eingestellt werden kann.

Von Besonderheit ist bei dem Grill 1, dass sich die umlaufende Wand 13 des Brennstoffbehälters 12 bis knapp an die Unterseite des Rostes 7 erstreckt. Belassen ist zwischen dem oberen Abschluss der Wand 13 und dem Rost 7 nur ein geringen Abstandspalt A, der bei dem dargestellten Ausführungsbeispiel etwa 1,5 cm beträgt. Der Brennstoffbehälter 12 ist oberseitig nicht verschlossen. Durch diese Maßnahme strömen die oberseitig aus dem Brennstoffbehälter 12 austretenden heißen Verbrennungsgase konzentriert die Unterseite eines geschlossen ausgeführten zentralen Rostbereich 22 des Rostes 7 an und werden an diesem in radialer Richtung nach außen umgelenkt.

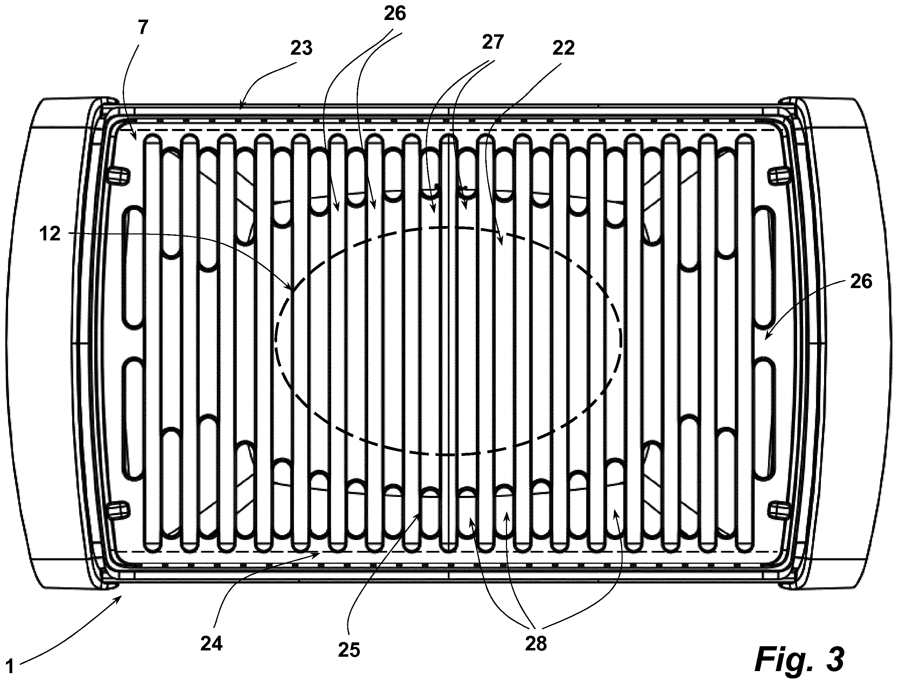

Die Draufsicht der Figur 3 auf den Grill 1 verdeutlicht die Konzeption des Rostes 7. Der Rost 7 weist eine rechteckförmige Grundrissgeometrie auf. In dieser Figur ist der Umriss des unterhalb des Rostes 7 befindlichen Brennstoffbehälters 12 gestrichelt eingetragen. Der Rost 7 verfügt über einen zentralen, geschlossen ausgeführten Rostbereich 22. Dieser Rostbereich 22 befindet sich unmittelbar oberhalb des oberen Abschlusses des Brennstoffbehälters 12 und erstreckt sich in radialer Richtung zu der umlaufenden Seitenwand 8 der Wannenstruktur 5 über diesen hinaus. Der Durchmesser des Brennstoffbehälters 12 in Querrichtung des Grills 1 beträgt etwa 50% der Erstreckung des Rostes 7 in dieser Richtung, und zwar bezogen auf den zum Grillen benutzbaren Bereich des Rostes 7. Der zum Grillen bzw. Garen benutzbare Rostbereich des Rostes 7 ist außenseitig durch eine Außenrippe 23 begrenzt. In dem geschlossen ausgeführten Rostbereich 22 sind keine Öffnungen für den Durchtritt von heißen Verbrennungsgasen vorgesehen. An die Außenrippe 23 ist in Richtung zu diesem geschlossen ausgeführten Rostbereich 22 ein ebenfalls geschlossen ausgeführter Randbereich 24 vorgesehen. Gestrichelt ist in Figur 3 der obere Abschluss der längsseitigen Seitenwände 8 der Wannenstruktur 5 angedeutet. Dieses verdeutlicht, dass der geschlossen ausgeführte Randbereich 24 sich in die obere Öffnung 11 der Wannenstruktur 5 hinein vorspringend ausgebildet ist. Zwischen dem geschlossen ausgeführten Randbereich 24 und dem geschlossen ausgeführten zentralen Rostbereich 22 befindet sich ein offen ausgeführter Rostbereich 26. Dieser weist bei dem dargestellten Ausführungsbeispiel langlochartige Durchbrechungen auf.

Der Rost 7 des dargestellten Ausführungsbeispiels ist eine umgeformte Stahlblechplatine und umfasst eine Mehrzahl parallel und mit Abstand zueinander angeordneter Roststäbe 26, die bei dem dargestellten Ausführungsbeispiel als nach oben weisende Sicken ausgeführt sind. Die Scheitel der Roststäbe 26 bilden den oberen Abschluss des Rostes 7. Die Scheitel der Roststäbe 26 befinden sich in einem einheitlichen Höhenniveau. Die geschlossen ausgeführten Rostbereiche 22, 24 zeichnen sich dadurch aus, dass die Roststäbe 26 miteinander durch das Material des Rostes 7 verbunden sind. Der Rost 7 ist einteilig ausgeführt. Die Materialstärke der als Sicken ausgeführten Roststäbe 26 entspricht, zumindest in etwa der Materialstärke des Zwischenroststabmaterials 27 und damit der auch der Materialstärke des geschlossen ausgeführten Rostbereiches 22. Zum Erzielen einer homogenen Wärmeverteilung bei einem Betrieb des Grills 1 auf der Oberfläche des Rostes 7 ist die Erstreckung des Zwischenroststabmaterials 27 in Querrichtung des Grills 1 nicht homogen. Vielmehr wird in dem mittleren Bereich durch die Länge des Zwischenroststabmaterials 27 die Kontur des Brennstoffbehälters 12 nachgezeichnet. In den längsseitigen Endbereichen ist dieser zentrale, geschlossen ausgeführte Rostbereich 22 bezüglich des Zwischenroststabmaterials 27 unter Ausbildung einer Taillierung zwischen dem drittletzten und vorletzten Roststab 26 wieder etwas länger gehalten. Die dadurch bewirkte größere, durch Wärmeleitung erwärmte Fläche wirkt sich positiv darauf aus, dass auch in den Eckbereichen des Rostes 7 eine bezüglich auch der übrigen Bereiche des Rostes 7 entsprechende Temperatur herrscht.

In dem offen ausgeführten Rostbereich 25 ist bei dem dargestellten Ausführungsbeispiel das Zwischenroststabmaterial aus den benachbarten, geschlossen ausgeführten Rostbereichen entfernt worden. Somit stellen diese Durchbrechungen 28 Durchtrittsöffnungen dar, durch die die heißen Verbrennungsgase aus der Wannenstruktur 5 nach oben austreten können, dar.

Bei dem dargestellten Ausführungsbeispiel entspricht die Breite der Roststäbe 26 etwa der Breite der Durchbrechungen 28 bzw. des Zwischenroststabmaterials 27.

Die Summe der Fläche der Durchbrechungen 28 entspricht bei dem dargestellten Ausführungsbeispiel etwa 30% der gesamten Nutzoberfläche des Rostes 7.

Aufgrund der geschickten Kombination unterschiedlicher Erwärmungs- bzw. Garmechanismen, die auf ein auf den Rost 7 aufgelegtes Gargut wirkt, und zwar zum einen ein Garen in den geschlossen ausgeführten Rostbereichen durch die in diesen Rostbereichen enthaltene Wärme und auf der anderen Seite durch direktes Anströmen des Gargutes mit heißen Verbrennungsgasen in dem offen ausgeführten Rostbereich 25, kann durch entsprechende Auslegung der geschlossen ausgeführten Rostbereiche und der offen ausgeführten Rostbereiche eine homogene Wärmeverteilung auch bei unterschiedlichen Rostgeometrien realisiert werden.

Die Erfindung ist anhand eines Ausführungsbeispiels unter Bezugnahme auf die beigefügten Figuren beschrieben. Ohne den Umfang der geltenden Ansprüche zu verlassen, ergeben sich für einen Fachmann zahlreiche weitere Ausgestaltungen, die Erfindung umsetzen zu können, ohne dass dieses im Rahmen dieser Ausführungen einzeln erläutert werden müsste.

### Bezugszeichenliste

- 1: Grill
- 2: Gehäuse
- 3: Fuß
- 4: Handhabungskontur
- 5: Wannenstruktur
- 6: Flansch
- 7: Grillrost
- 8: Seitenwand
- 9: Boden
- 10: Rinne
- 11: Oberseitige Öffnung
- 12: Brennstoffbehälter
- 13: Umlaufende Wand
- 14: Bodenteil
- 15: Boden
- 16: Wand
- 17: Anzünderschale
- 18: Luftzufuhrrohr
- 19: Kragen
- 20: Schild
- 21: Garflüssigkeitsablauföffnung
- 22: Geschlossen ausgeführter Rostbereich
- 23: Außenrippe
- 24: Geschlossen ausgeführter Randbereich
- 25: Offen ausgeführter Rostbereich
- 26: Roststab
- 27: Zwischenroststabmaterial
- 28: Durchbrechung
- A: Abstandspalt

## Patentansprüche

1. Grill mit einer oberseitig offenen, eine umlaufende Seitenwand (8) aufweisenden Wannenstruktur (5), mit einem in der Wannenstruktur (5) mit Abstand zu deren Seitenwand (8) angeordneten Brennstoffbehälter (12), mit einer Luftzuführung zum unterseitigen Zuführen von Luft in den Brennstoffbehälter (12) und mit einem sich über die oberseitige Öffnung (11) der Wannenstruktur (5) erstreckenden Rost (7), dessen in der Flucht des Umrisses des Brennstoffbehälters (12) oberhalb des Brennstoffbehälters (12) befindlicher Rostbereich (22) geschlossen ausgeführt ist, wobei der Rost (7) einen geschlossen ausgeführten, umlaufenden Randbereich (24) aufweist und zwischen dem zentralen, geschlossen ausgeführten Rostbereich (22) und dem geschlossen ausgeführten Randbereich (24) ein zum Herauslassen der Verbrennungsgase aus der Wannenstruktur (5) offen ausgeführter Rostbereich (25) vorgesehen ist, in welchem offen ausgeführten Rostbereich (25) der zentrale Rostbereich (22) mit dem Randbereich (24) durch Abstand zueinander angeordnete Roststäbe (26) verbunden ist, **dadurch gekennzeichnet, dass** sich der oberseitige Abschluss des Brennstoffbehälters (12) unter Belassung nur eines nur geringen Abstandspaltes (A) bis an die Unterseite des geschlossen ausgeführten Rostbereiches (22) des Rostes (7) erstreckt, und dass sich der geschlossen ausgeführte, oberhalb des Brennstoffbehälters (12) befindliche, zentrale, Rostbereich (22) des Rostes (7) über den zu der Seitenwand (8) der Wannenstruktur (5) weisenden seitlichen Abschluss des Brennstoffbehälters (12) in Richtung zum Randabschluss des Rostes (7) hinaus erstreckt.

2. Grill nach Anspruch 1, **dadurch gekennzeichnet, dass** der Rost (7) einteilig ausgeführt ist.

3. Grill nach Anspruch 1 oder 2, **dadurch gekennzeichnet, dass** der Brennstoffbehälter (12) oberseitig in Richtung zu dem geschlossen ausgeführten Rostbereich (22) offen ist.

4. Grill nach einem der Ansprüche 1 bis 3, **dadurch gekennzeichnet, dass** der geschlossen ausgeführte Randbereich (24) des Rostes (7) sich in Richtung zu dem zentralen, geschlossen ausgeführten Rostbereich (22) über den oberseitigen Abschluss der Seitenwand (8) der Wannenstruktur (5) vorspringend erstreckt.

5. Grill nach einem der Ansprüche 1 bis 4, **dadurch gekennzeichnet, dass** der Rost ein gusseiserner Rost ist.

6. Grill nach einem der Ansprüche 1 bis 4, **dadurch gekennzeichnet, dass** der Rost (7) aus einer Stahlblechplatine einstückig hergestellt ist.

7. Grill nach Anspruch 5 oder 6, **dadurch gekennzeichnet, dass** der Rost (7) sich über dessen Erstreckung in einer Richtung bis in den Randbereich reichende Roststäbe (26) aufweist und diese nach Art von mit ihren Scheiteln nach oben weisenden Sicken mit etwa U-förmiger oder V-förmiger Querschnittsfläche ausgeführt sind.

8. Grill nach einem der Ansprüche 1 bis 7, **dadurch gekennzeichnet, dass** die Gesamtoberfläche der Durchbrechungen (28) des Rostes (7) an der Gesamtoberfläche des Rostes (7) 15% bis 50% ausmacht.

9. Grill nach Anspruch 8, **dadurch gekennzeichnet, dass** die Gesamtoberfläche der Durchbrechungen (28) des Rostes (7) an der Gesamtoberfläche des Rostes (7) 15% bis 35%, insbesondere 25% bis 30% ausmacht.

10. Grill nach einem der Ansprüche 1 bis 9, **dadurch gekennzeichnet, dass** die Breite der Roststäbe (26) der lichten Weite der jeweils benachbarten Durchbrechung (28) entspricht oder größer ist als diese.

11. Grill nach einem der Ansprüche 1 bis 10, **dadurch gekennzeichnet, dass** der Durchmesser des Brennstoffbehälters (12) in seinem den Brennstoff aufnehmenden Abschnitt 40% bis 65% der Öffnungsweite der oberseitigen Öffnung der Wannenstruktur (5) in Durchmesserrichtung des Brennstoffbehälters (12) beträgt, wobei sich der Durchmesser des Brennstoffbehälters (12) bei einem Grill (1) mit nicht rotationssymmetrischer oberseitiger Öffnung seiner Wannenstruktur auf dessen Haupterstreckungsrichtungen bezieht.

12. Grill nach Anspruch 11, **dadurch gekennzeichnet, dass** der Durchmesser des Brennstoffbehälters (12) in seinem den Brennstoff aufnehmenden Abschnitt 45% bis 55% der Länge der oberseitigen Öffnung der Wannenstruktur in der Durchmesserrichtung des Brennstoffbehälters (12) beträgt.

13. Grill nach einem der Ansprüche 1 bis 12, **dadurch gekennzeichnet, dass** der Brennstoffbehälter (12) eine umlaufende, den darin aufzunehmenden Brennstoff einfassende, vertikal verlaufende Wand (13) aufweist.

## Claims

1. Grill with a trough structure (5), open on the upper side and comprising a circumferential side wall (8), with a fuel container (12) arranged in the trough structure (5) at a distance from its side wall (8), with an air feed for delivering air on the under side into the fuel container (12), and with a grill grate (7) extending over the upper side opening (11) of the trough structure (5), of which the grate area (22) located above the fuel holder (12) is configured as closed in the alignment of the outline of the fuel container (12), wherein the grate (7) comprises a closed circumferential edge area (24), and, between the central closed grate area (22) and the closed edge area (24), a grate area (25) is provided, configured as open in order to allow the combustion gases to escape from the trough structure (5), connected to the open grate area (25) of which is the central grate area (22) with the edge area (24), with the grate bars (26) arranged at a distance from one another, **characterised in that** the connection on the upper side of the fuel container (12) extends, leaving only a small spacing gap (A), as far as the under side of the closed grate area (22) of the grate (7), and that the closed grate area (22) of the grate (7), located above the fuel container (12), extends over the side connection of the fuel container (12), facing towards the side wall (8) of the trough structure (5), in the direction towards the edge connection of the grate (7).

2. Grill according to claim 1, **characterised in that** the grate (7) is configured as being of one piece.

3. Grill according to claim 1 or 2, **characterised in that** the fuel container (12) is open on the upper side in the direction towards the closed grate area (22).

4. Grill according to any one of claims 1 to 3, **characterised in that** the closed edge area (24) of the grate (7) extends in the direction towards the central closed grate area (22), projecting over the upper side connection of the side wall (8) of the trough structure (5).

5. Grill according to any one of claims 1 to 4, **characterised in that** the grate is a cast-iron grate.

6. Grill according to any one of claims 1 to 4, **characterised in that** the grate (7) is produced as one piece from a plate of steel sheet.

7. Grill according to any one of claims 5 to 6, **characterised in that** the grate (7) comprises grate bars (26) which reach over its extension in a direction as far as the edge area, and that these are configured in the form of a beading with its crown facing upwards, with an approximately U-shaped or V-shaped a cross-section surface.

8. Grill according to any one of claims 1 to 7, **characterised in that** the total surface area of the passage openings (28) of the grate (7) makes up 15% to 50% of the total surface area of the grate (7).

9. Grill according to claim 8, **characterised in that** the total surface area of the passage openings (28) of the grate (7) makes up 15% to 35% of the total surface area of the grate (7), and in particular 25% to 30%.

10. Grill according to any one of claims 1 to 9, **characterised in that** the width of the grate bars (26) corresponds to the clear width of the respective adjacent passage opening (28), or is greater than this.

11. Grill according to any one of claims 1 to 10, **characterised in that** the diameter of the fuel container (12), in its section which receives the fuel, amounts to 40% to 65% of the opening width of the upper side opening of the trough structure (5) in the diameter direction of the fuel container (12), wherein the diameter of the fuel container (12), with a grill (1) with a non-rotationally symmetric upper side opening of its trough structure, relates to its main extension directions.

12. Grill according to claim 11, **characterised in that** the diameter of the fuel container (12), in its section which receives the fuel, amounts to 45% to 55% of the length of the upper side opening of the trough structure in the diameter direction of the fuel container (12).

13. Grill according to any one of claims 1 to 12, **characterised in that** the fuel container (12) comprises a circumferential and vertical wall (13) enclosing the fuel which is to be received.

## Revendications

1. Gril comportant une structure de cuve (5) ouverte sur la face supérieure, présentant une paroi latérale (8) périphérique, avec un conteneur de combustible (12) disposé dans la structure de cuve (5) à distance de sa paroi latérale (8), muni d'une arrivée d'air afin d'acheminer de l'air par la face inférieure dans le conteneur de combustible (12) et avec une grille (7) s'étendant au-dessus de l'ouverture (11) sur la face supérieure de la structure de cuve (5), grille dont la zone de grillade (22) se trouvant dans l'alignement du contour du conteneur de combustible (12), au-dessus du conteneur de combustible (12), est conçue fermée, laquelle grille (7) présentant une zone de bordure (24) périphérique, conçue fermée, et une zone de grillade (25) conçue ouverte étant prévue entre la zone de grillade (22) centrale, conçue fermée, et la zone de bordure (24), conçue fermée, afin de permettre la sortie des gaz de combustion de la structure de cuve (5), dans laquelle zone de grillade (25), conçue ouverte, la zone de grillade (22) centrale est reliée à la zone de bordure (24) par des baguettes de grille (26) disposées à distance les unes des autres, **caractérisé en ce que** la terminaison sur la face supérieure du conteneur de combustible (12) s'étend, en laissant seulement une faible fente d'intervalle (A) jusqu'à la face inférieure de la zone de grillade (22), conçue fermée, de la grille (7) et **en ce que** la zone de grillade (22) centrale, conçue fermée, située au-dessus du conteneur de combustible (12), de la grille (7), s'étend au-delà de la terminaison latérale du conteneur de combustible (12), orientée vers la paroi latérale (8) de la structure de cuve (5), en direction de la bordure de la grille (7).

2. Gril selon la revendication 1, **caractérisé en ce que** la grille (7) est réalisée d'un seule tenant.

3. Gril selon la revendication 1 ou 2, **caractérisé en ce que** le conteneur de combustible (12) est ouvert sur la face supérieure en direction de la zone de grillade (22) conçue fermée.

4. Gril selon l'une des revendications 1 à 3, **caractérisé en ce que** la zone de bordure (24) de la grille (7), conçue fermée, s'étend en direction de la zone de grillade (22) centrale, conçue fermée, en saillie au-dessus de la terminaison sur la face supérieure de la paroi latérale (8) de la structure de cuve (5).

5. Gril selon l'une des revendications 1 à 4, **caractérisé en ce que** la grille est une grille en fonte.

6. Gril selon l'une des revendications 1 à 4, **caractérisé en ce que** la grille (7) est fabriquée d'un seul tenant à partir d'un panneau de tôle d'acier.

7. Gril selon la revendication 5 ou 6, **caractérisé en ce que** la grille (7) présente des baguettes de grille (26) s'étendant sur celle-ci dans une direction allant jusqu'à la zone de bordure et que celles-ci sont conformées à la manière de moulures dont la crête est orientée vers le haut, avec une section transversale à peu près en forme de U ou de V.

8. Gril selon l'une des revendications 1 à 7, **caractérisé en ce que** la surface globale des perforations (28) de la grille (7) représente 15 % à 50 % de la surface globale de la grille (7).

9. Gril selon la revendication 8, **caractérisé en ce que** la surface globale des perforations (28) de la grille (7) représente 15 % à 35 % de la surface globale de la grille (7), notamment 25 % à 30 %.

10. Gril selon l'une des revendications 1 à 9, **caractérisé en ce que** la largeur des baguettes de grille (26) correspond à la largeur d'ouverture de la performation (28) voisine ou est plus grande que cette dernière.

11. Gril selon l'une des revendications 1 à 10, **caractérisé en ce que** le diamètre du conteneur de combustible (12) représente, dans son tronçon de réception du combustible, 40 à 65 % de la largeur d'ouverture de l'ouverture sur la face supérieure de la structure de cuve (5), dans le sens diamétral du conteneur de combustible (12), le diamètre du conteneur de combustible (12) pour un gril (1), avec une ouverture de sa structure de cuve sur la face supérieure non symétrique en rotation, se rapportant à ses directions d'étendue longitudinale principales.

12. Gril selon la revendication 11, **caractérisé en ce que** le diamètre du conteneur de combustible (12) représente, dans son tronçon de réception du combustible, 45 % à 55 % de la longueur de l'ouverture sur la face supérieure de la structure de cuve, dans le sens diamétral du conteneur de combustible (12).

13. Gril selon l'une des revendications 1 à 12, **caractérisé en ce que** le conteneur de combustible (12) présente une paroi (13) périphérique, s'étendant verticalement, englobant dans celle-ci le combustible à réceptionner.
